# EUROPEAN PATENT APPLICATION

(11) **EP 2 960 109 A1**
(43) Date of publication of application: **30.12.2015**
(21) Application number: 15173317.7
(22) Date of filing: 23.06.2015
(51) Int. Cl.: B60N 2/60

(54) **SEAT COVER BAG**

(30) Priority: 23.06.2014 GB 201411155
(71) Applicant: International Tool Company Limited, Coalville, Leicestershire LE67 1PH (GB)
(72) Inventor: Chapman, David, Coalville, Leicestershire LE67 1PH (GB)
(74) Representative: Sessford, Russell

(57) **Abstract**

A removable seat cover 1 comprising: a main panel 2 arranged to cover at least a portion of a backrest of a seat and at least a portion of a seat base; at least one attachment arrangement 3, 4 configured to fit the removable seat cover with respect to a seat, the at least one attachment arrangement and a first portion 2a of the main panel defining a first pocket; and an adjustable closure element 5 for substantially closing an opening of the first pocket, such that the removable seat cover can be reversibly converted between a first configuration, in the form of a seat cover, and a second configuration, in the form of a bag, wherein a second portion of the main panel is storable in the first pocket when the removable seat cover is in the second configuration.

## Description

The present invention relates to seat covers. In particular, the present invention relates to removable seat covers for vehicle seats, and to vehicles having seats to which such covers are fitted. The present invention also relates to a removable seat cover that can be converted into a bag.

A mechanic working on a vehicle is often dressed in clothes or overalls which may be soiled with, for example, oil. As part of their work on a vehicle, the mechanic is often required to sit in the driver's seat, in order to start the engine of the vehicle, move, and/or test drive the vehicle. The soiled clothing of the mechanic can mark the upholstery of the driver's seat, and can, on occasions, permanently stain the upholstery.

Typically, temporary seat covers are provided for use by a mechanic when they are conducting work on a vehicle. Such seat covers may be disposable, in the form of thin sheet plastic, or may be reusable. Reusable seat covers are typically more durable, and can be rolled up or otherwise compacted when they are no longer required for use. In this case, seat covers can become misplaced, or even lost. This can be inconvenient, thus requiring an alternative seat cover to be sourced.

At exhibitions and shows (and other events), it is common for exhibitors to provide small bags to visitors which contain marketing materials and/or samples. These small bags are typically made of plastic and have advertisements printed on their exterior surface - such that the bags themselves form marketing material. It is common for such bags to be discarded after the event. The discarded bags no longer function as marketing material and disposal can be environmentally hazardous. Therefore, such bags have a relatively short useful life and a relatively high environmental cost.

Embodiments of the present invention seek to ameliorate one or more problems associated with the prior art.

Accordingly, an aspect of the present invention provides a removable seat cover comprising: a main panel arranged to cover at least a portion of a backrest of a seat and at least a portion of a seat base; at least one attachment arrangement configured to fit the removable seat cover with respect to a seat, the at least one attachment arrangement and a first portion of the main panel defining a first pocket; and an adjustable closure element for substantially closing an opening of the first pocket, such that the removable seat cover can be reversibly converted between a first configuration, in the form of a seat cover, and a second configuration, in the form of a bag, wherein a second portion of the main panel is stored in the first pocket when the removable seat cover is in the second configuration.

The first pocket may be configured to receive at least a portion of a back of a seat.

The first pocket may be configured to receive at least a portion of a seat base.

The removable seat cover may be provided with two attachment arrangements.

The adjustable closure element may be provided at a boundary defined between the at least one attachment arrangement and the main panel.

The adjustable closure element may extend along at least a portion of a peripheral edge of the at least one attachment arrangement and at least a portion of the main panel.

The adjustable closure element may be continuous along the peripheral edge of the at least one attachment arrangement and the main panel.

The adjustable closure element may be a drawstring. The drawstring may comprise a clip.

The removable seat cover may include a loop.

The removable seat cover may include indicia.

Another aspect of the present invention provides a vehicle including a seat to which a removable seat cover is fitted.

Another aspect of the present invention provides a method of reversibly converting a removable seat cover between a first configuration, in the form of a seat cover, and a second configuration, in the form of a bag, the method including: providing a removable seat cover according to the present invention; storing the second portion of the main panel in the at least one attachment arrangement; and adjusting the adjustable closure element to substantially close the opening of the first pocket.

The method may further comprise the step of: inverting the at least one attachment arrangement before storing the second portion of the main panel therein.

Aspects of embodiments of the present invention are described herein, by way of example only, with reference to the accompanying drawings, in which:
Figure 1 shows aspects of a removable seat cover in accordance with an embodiment of the present invention;
Figure 2 shows aspects of a removable seat cover in accordance with an embodiment of the present invention;
Figure 3 shows aspects of a removable seat cover in accordance with an embodiment of the present invention;
Figure 4 shows aspects of a removable seat cover in accordance with an embodiment of the present invention; and
Figure 5 shows aspects of a removable seat cover in accordance with an embodiment of the present invention.

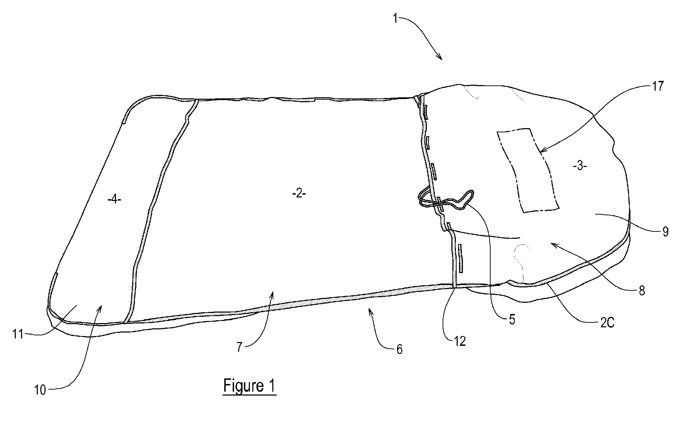

With reference to figures 1-5, an embodiment of the present invention includes a removable seat cover 1 for covering the seat of a vehicle.

The removable seat cover 1 includes a main panel 2 arranged to cover at least a portion of a backrest of a seat and at least a portion of a seat base, so as to protect the upholstery of the seat from being soiled or otherwise stained or damaged. The removable seat cover 1 also includes a first attachment arrangement 3, a second attachment arrangement 4 and an adjustable closure element 5. The removable seat cover 1 can, in use, be reversibly converted between a first configuration, in the form of a seat cover, and a second configuration, in the form of a bag, as described herein.

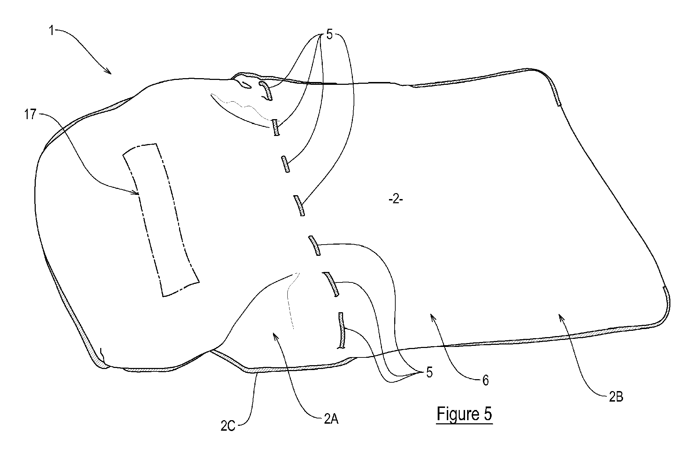

The main panel 2 is planar and flexible so as to conform substantially to the geometry of a seat of a vehicle. The main panel 2 has a front surface 6 and a back surface 7. The front surface 6 is configured so as to be in contact with the back of a user once the seat cover 1 has been fitted to the seat of a vehicle. The back surface 7 is configured so as to contact the surface of the seat to which the seat cover 1 is fitted directly. The main panel 2 has a first portion 2A and a second portion 2B (best seen in figure 5). The first portion 2A of the main panel 2 can generally be considered to be an upper portion of the seat cover 1 when the seat cover 1 is in an *in use* orientation. It follows that the second portion 2B of the main cover 2 is generally a lower portion of the seat cover 1 when the seat cover 1 is in the *in use* orientation.

The main panel 2 may be manufactured from a woven material, and may be formed from a plastic material, for example, from a nylon- or polyester-based material. The main panel 2 may be formed from a material that is provided with a coating or the like to inhibit or prevent the soiling of the material and/or to improve the wear properties of the material. This may further include materials which prevent the absorption and/or the penetration of fluids through the material.

The main panel 2 is securable to a seat of a vehicle by the first attachment arrangement 3 and the second attachment arrangement 4, respectively. The first attachment arrangement 3 is configured to fit the removable seat cover 1 with respect to the seat of a vehicle and, in particular, is configured to receive at least a portion of a back of the seat. The second attachment arrangement 3 is configured to fit the removable seat cover 1 with respect to the seat of a vehicle and, in particular, is configured to receive at least a portion of a seat base (i.e. a squab of the seat).

The first attachment arrangement 3 is formed by the provision of a first pocket 8. The first pocket 8 is located adjacent the back surface 7 of the main panel 2. The first pocket 8 extends along at least part of the length of the main panel 2 and may extend across substantially the entire width of the main panel 4. The first pocket 8 is formed by a first pocket panel 9 and at least a part of the first portion 2A of the main panel 2. The first pocket panel 9 is secured around at least part of the periphery 2C of the main panel 2 (around at least a portion of the first portion 2A) and is generally parallel to the main panel 2.

The first attachment arrangement 3 (e.g. the first pocket panel 9) may be manufactured from a woven material, and may be formed from the same material as that of the main panel 2.

The second attachment arrangement 4 is formed by the provision of a second pocket 10. The second pocket 10 is located adjacent the back surface 7 of the main panel 2. The second pocket 10 extends along at least part of the length of the main panel 2 and may extend across substantially the entire width of the main panel 2. The second pocket 10 is formed by a second pocket panel 11 and at least a part of the second portion 2B of the main panel 2. The second pocket panel 11 is secured around at least part of the periphery 2C of the main panel 2 (around at least a portion of the second portion 2B) and is generally parallel to the main panel 2.

The second attachment arrangement 4 (e.g. the second pocket panel 11) may be manufactured from a woven material, and may be formed from the same material as that of the main panel 2.

Although it has been described that the first and second pockets 8,10 are formed by first and second pocket panels 9,11, (i.e. separate panels to the main panel 2) it will be appreciated that the first and second pockets 8,10 may be integral with the main panel 2, that is, the first and second pockets 8,10 may be formed from portions of the main panel 2 (which may include at least a portion of the first and second portions 2A,2B of the main panel 2). In this form, the first pocket 8 may be formed by folding a portion of the main panel 2 back on itself towards one end thereof across a width of the main panel 2. Accordingly, it will be appreciated that the reversed portion of the main panel 2 in effect provides the first pocket panel 9. The overlapping edges of the folded portions can then be attached to each other by any suitable means, for example by stitching, to form the first pocket 8. The second pocket 10 may be formed in a similar manner. Piping or other edging may be provided along the edges of the main panel 2 and the first and second pocket panels 9,11 to reinforce the first and second pocket panels 9,11 and to reduce the risk of the material used to form the panels 2,9,11 tearing or otherwise being damaged during use.

Although the provision of first and second attachment arrangements 3,4 has been described, it will be appreciated that only one attachment arrangement may be present. Conveniently, in this case, an attachment arrangement is provided for securing the removable seat cover 1 to at least a portion of the back of a seat of a vehicle, such that the seat cover 1 is held in position during use. It will be appreciated however that, in an alternative arrangement, the seat cover 1 may be provided with an attachment arrangement that is configured to secure the seat cover to at least a portion of a seat base (i.e. a squab of a seat) of a vehicle. In either case, a pocket may be provided, and the pocket may be formed by any of the methods described.

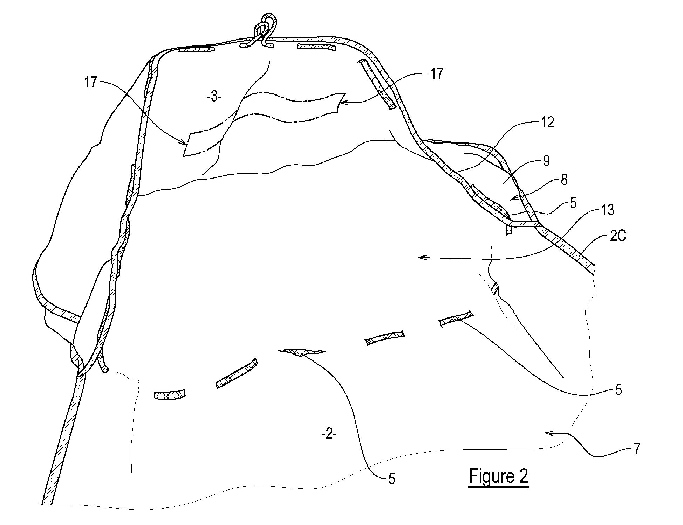

The removable seat cover 1 also includes the adjustable closure element 5. The adjustable closure element 5 may be provided at a boundary defined between the first attachment arrangement 3, in particular the first pocket panel 9, and the main panel 2. The boundary is thus defined as being where a peripheral edge 12 of the first pocket panel 9 meets the main panel 2 to define an opening 13 of the first pocket 8. The adjustable closure element 5 is provided to close the opening 13 of the first pocket 8 at least partially. The adjustable closure element 5 may be provided in any form for temporarily closing or reducing the size of the opening 13. In some embodiments, the adjustable closure element 5 may be a drawstring such that the size of the opening 13 (best seen in figure 2) can be reduced by operation of the drawstring. The drawstring may, therefore, extend around a circumference of the opening 13. In some embodiments, the opening 13 can be substantially closed by operation of the drawstring. The use of the drawstring thus permits the user to adjust the degree of closure of the opening required, if any, according to the required use.

In some embodiments the adjustable closure element 5 (such as a drawstring) extends along at least a portion of the peripheral edge 12 of the first pocket panel 9 and at least a portion of the main panel 2. In this respect, the adjustable closure element 5 may be tethered to both the peripheral edge 12 of the first pocket panel 9 and the main panel 2 at discrete points, thus weaving in and out of the material (best seen in figure 2). The adjustable closure element 5 (e.g. in the form of a drawstring) may be provided in a channel, piping or the like, such that the adjustable closure element 5 extends in a substantially continuous manner inside the channel. The channel may be provided around a circumference of the opening 13 - i.e. along at least a portion of the peripheral edge 12 of the first pocket panel 9 and the main panel 2.

The adjustable closure element 5 may further include a clip 15 configured to be secured selectively to a loop 16. The clip 15 may be provided in any form, for example, a spring clip. The spring clip may be a metal loop with a springloaded gate (e.g. a karabiner) such that opening and closing of the springloaded gate permits fastening and unfastening of the clip. The clip 15 may be affixed to the adjustable closure element 5 (i.e. along a length of the drawstring).

The clip 15 includes a clamp part which is configured to secure (e.g. clamp) selectively a part of the adjustable closure element 5 with respect to another part thereof to alter an operative length of the adjustable closure element 5 to hold the size of the opening 13 at a particular size. The clamp part of the clip 15 may, therefore, include a user control which can be actuated between a closed position in which two parts of the adjustable closure element 5 are held with respect to each other, and an open position in which a part of the adjustable closure element 5 is moveable with respect to another part through the clamp part of the clip 15. The clamp part may, for example, comprise a piston mounted within a cylinder. A wall of the cylinder may define an aperture therethrough and the piston may be configured to clamp a drawstring (for example) which passes through the aperture defined by the cylinder, between the piston and an edge of the aperture. The piston may be biased into a clamping position by a resilient biasing mechanism. The piston may be moveable under a manual force applied by a user between the open and closed positions.

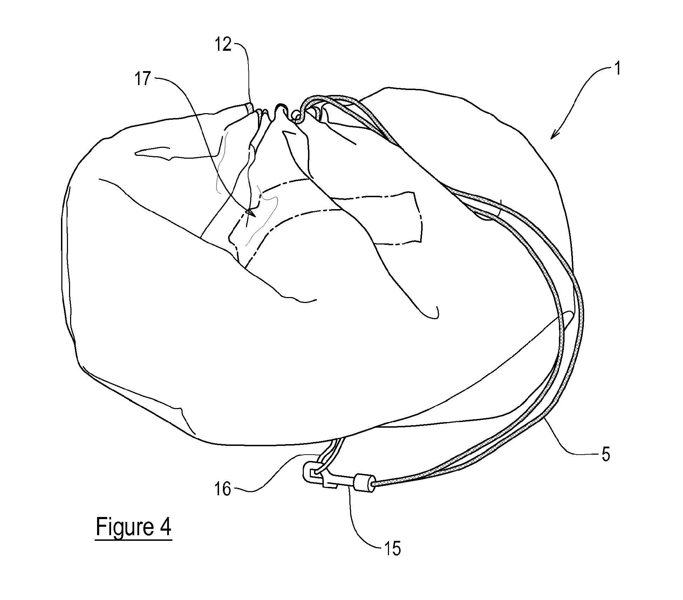

Embodiments of the removable seat cover 1 may further include the loop 16 (best seen in figure 4). The loop 16 may be affixed to or with respect to the main panel 2 (e.g. at an edge). The loop 16 defines at least one aperture, such that the clip 15 may engage the loop 16 selectively.

In some embodiments, the clamp part is independent of the clip 15. In such embodiments, the loop 16 may be secured to the clamp part and the remainder of the clip 15 may be secured to or with respect to the main panel 2. In some such embodiments, the loop 16 is a loop of a drawstring forming part of the adjustable closure element 5. The loop 16 may be defined by the clamp part.

In some embodiments, the clamp part and the rest of the clip 15 are coupled to each other by a flexible coupling. For example, the flexible coupling may include a ring about which both the clamp part and the rest of the clip 15 are configured to move independently of each other. In some embodiments, the flexible coupling includes an elastic member. In some embodiments, however, the clamp part and the rest of the clip 15 are rigidly coupled to each other. The adjustable closure element 5 may be provided in the form of a hook and loop fastener.

The seat cover 1 may be provided with one or more carry handles such that the user may carry the seat cover 1 in a bag configuration.

The removable seat cover 1 may further include indicia 17 which may be in the form of a logo, an advertisement or the like. The indicia 17 may be printed or otherwise transferred onto the material of the seat cover 1, or may be affixed to the seat cover 1, for example, in the form of a badge. It will be appreciated that any indicia 17 provided may be provided at numerous locations on the main panel 2 and/or the pocket panels 9,11, on both inner and outer (or front and back surfaces) regions.

In some embodiments, indicia 17 may be provided on an outer surface of the first pocket panel 9 of the first pocket 8. The indicia 17 may be inverted with respect to a normal orientation of the seat cover 1 when fitted to the seat of a vehicle. In other words, a top of the indicia 17 may be towards the opening 13. In other embodiments, the indicia is orientated with respect to the normal orientation of the seat cover 1 - such that a top of the indicia is towards and end of the first pocket panel 9 away from the opening 13.

The removable seat cover 1 may include further indicia 17, that is, indicia 17 in addition to or instead of indicia 17 described above.

In some embodiments, indicia 17 may be provided on an inner surface of the first pocket panel 9 of the first pocket 8. In this case, said indicia 17 may be orientated with respect to the normal orientation of the seat cover 1 when fitted to the seat of a vehicle, or may be inverted with respect to the normal orientation of the seat cover 1. In the inverted form, a top of the indicia is towards the opening 13. In the normal orientation, a top of the indicia is towards an end of the first pocket panel 9 away from the opening 13.

In some embodiments, indicia 17 may be provided on both an inner and an outer surface of the first pocket panel 9 of the first pocket 8. In this respect, any indicia 17 may be orientated with respect to the normal orientation of the seat cover 1, or may be inverted with respect to the normal orientation of the seat cover 1 or with respect to any other indicia 17 provided - as described above.

With reference to figure 5, the removable seat cover 1 may be provided with indicia 17 on the main panel 2. Said indicia 17 may be provided on the front surface 6 of the main panel 2 and may be positioned on the first portion 2A of the main panel 2 (e.g. in a position adjacent a headrest of a seat).

It will be understood that, in cases where only one attachment arrangement 3, 4 is provided, and that the attachment arrangement 3,4 provided is in the form of a pocket 8,10 for securing the seat cover 1 to at least a portion of the base of a seat of a vehicle, the adjustable closure element 5 is provided at a boundary defined between that attachment arrangement 3,4, in particular the pocket panel 9,11 provided by that attachment arrangement 3,4, and the main panel 2.

In use, the removable seat cover 1 may be used as both a seat cover for protecting the upholstery of a seat of a vehicle, and a bag. The conversion of the seat cover 1 between a first configuration as a seat cover and a second configuration as a bag will now be described. The seat cover 1 may simply and easily be converted between one configuration and another, and back again, according to use.

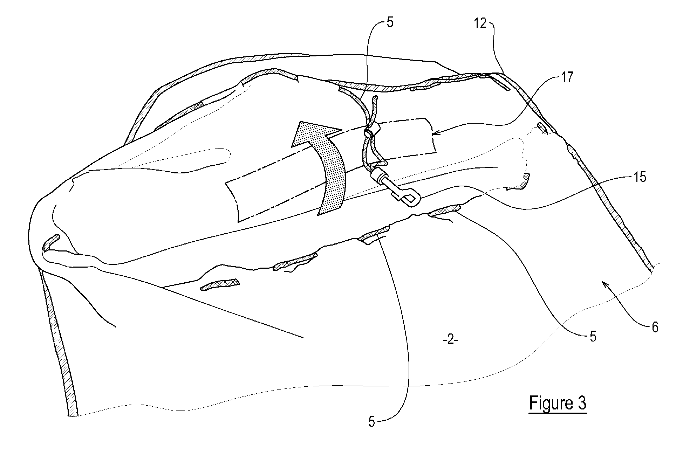

Starting with the seat cover 1 in a first configuration, that is, as a seat cover, the first pocket panel 9 is initially lifted, as shown in figure 2. A portion of the first pocket panel 9 and/or the main panel 2 which defines at least part of the first pocket 8 may then be pulled through the opening 13 thus inverting (i.e. turning inside out) the first pocket 8. The first pocket 8 in a partially inverted form is shown in figure 3.

Following the previous step, once the first pocket 8 is fully inverted, the remaining material, that is, the majority of the main panel 2 and the second attachment arrangement 4 may then be rolled up or folded, and placed within the inverted first pocket 8.

Thus the first pocket 8, when inverted, forms a bag for housing the rest of the seat cover 1. In such a manner the inside of the first pocket 8 forms the outside of the bag.

The adjustable closure element 5 (e.g. drawstring) may then be operated so as to close the opening 13 at least partially, or to close the opening 13 further, as shown in figure 4. The degree to which the opening 13 is closed may be determined by the position of the clamp part with respect to the adjustable closure element 5. Finally, the clip 15 may be attached to the loop 16 in order to form a carry strap of the bag. Conversion of the bag to a seat cover is achieved by simply reversing the aforementioned steps.

It will be appreciated that embodiments of the present invention may include a vehicle including a seat to which such a removable seat cover 1 is fitted.

The present invention finds particular use within vehicles, such as road vehicles, which are provided with expensive and/or delicate upholstery, such as leather seat covers and the like. It will be understood that the term "vehicle" has been used as a general reference to a means of transportation. Typically, the vehicle referred to is of a type that is subjected to periodic maintenance, maintenance of which requires a mechanic to use a seat of the vehicle as part of the maintenance activity.

When in the second configuration, as a bag, the seat cover 1 may be used to store and carry one or more other items - such as marketing material or product samples.

Embodiments of the present invention, therefore, seek to provide a dual purpose bag. The dual purpose bag can act as a seat cover and a bag. In both configurations, advertising (i.e. the indicia 17) may be on display. Different indicia 17 may be displayed in each configuration of the seat cover 1.

The use of embodiments seeks to reduce one or more problems associated with the environmental hazards of disposing of plastic bags whilst providing a better (more lasting) advertising medium.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A removable seat cover comprising:
a main panel arranged to cover at least a portion of a backrest of a seat and at least a portion of a seat base;
at least one attachment arrangement configured to fit the removable seat cover with respect to a seat, the at least one attachment arrangement and a first portion of the main panel defining a first pocket; and
an adjustable closure element for substantially closing an opening of the first pocket, such that the removable seat cover can be reversibly converted between a first configuration, in the form of a seat cover, and a second configuration, in the form of a bag, wherein a second portion of the main panel is storable in the first pocket when the removable seat cover is in the second configuration.

2. A removable seat cover according to claim 1, wherein the first pocket is configured to receive at least a portion of a back of a seat
OR
wherein the first pocket is configured to receive at least a portion of a seat base.

3. A removable seat cover according to any preceding claim, wherein two attachment arrangements are provided.

4. A removable seat cover according to any preceding claim, wherein the adjustable closure element is provided at a boundary defined between the at least one attachment arrangement and the main panel.

5. A removable seat cover according to claim 4, wherein the adjustable closure element extends along at least a portion of a peripheral edge of the at least one attachment arrangement and at least a portion of the main panel.

6. A removable seat cover according to claim 5, wherein the adjustable closure element is continuous along the peripheral edge of the at least one attachment arrangement and the main panel.

7. A removable seat cover according to any preceding claim, wherein the adjustable closure element is a drawstring.

8. A removable seat cover according to claim 7, wherein the drawstring comprises a clip.

9. A removable seat cover according to any preceding claim, further comprising a loop.

10. A removable seat cover according to any preceding claim, further comprising indicia.

11. A vehicle including a seat to which a removable seat cover according to claims 1 to 10 is fitted.

12. A method of reversibly converting a removable seat cover between a first configuration, in the form of a seat cover, and a second configuration, in the form of a bag, the method including:
providing a removable seat cover according to any of claims 1 to 10;
storing the second portion of the main panel in the at least one attachment arrangement; and
adjusting the adjustable closure element to substantially close the opening of the first pocket.

13. A method according to claim 12, further comprising: inverting the at least one attachment arrangement before storing the second portion of the main panel therein.

14. A removable seat cover substantially as herein described with reference to the accompanying drawings.

15. A method substantially as herein described with reference to the accompanying drawings.
